Europäisches Patentamt

European Patent Office

Office européen des brevets

(11) Veröffentlichungsnummer: **0 456 875 A1**

(12) **EUROPÄISCHE PATENTANMELDUNG**

(21) Anmeldenummer: 90109512.5

(22) Anmeldetag: 18.05.90

(51) Int. Cl.5: **H01S 3/086**

(43) Veröffentlichungstag der Anmeldung:
21.11.91 Patentblatt 91/47

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Huber, Wilhelm**
**Am Bach 44**
**W-8055 Goldach(DE)**

(54) **Wellenleiterlaser.**

(57) Ein Wellenleiterlaser mit Resonatorspiegeln 1,2 wird dadurch während des Betriebes justierbar gemacht, daß zumindest der teildurchlässige Spiegel 1 auf der dem Wellenleiter 5 zugewandten Seite eines Spiegelhalters 3 angeordnet ist, daß die Spiegelhalterung 3 eine Strahldurchtrittsöffnung enthält, daß ein Endbereich der Spiegelhalterung 3 zum Ansetzen eines Justierwerkzeuges 8 geeignet ausgebildet ist und daß dieses Justierwerkzeug 8 eine mit der Durchtrittsöffnung der Spiegelhalterung 3 fluchtende Durchtrittsöffnung enthält und gleichzeitig den Austritt von Laserstrahlung verhindert.

Die Erfindung eignet sich für CO- oder $CO_2$-Wellenleiterlaser.

## FIG 3

Die vorliegende Erfindung betrifft einen Wellenleiterlaser gemäß dem Oberbegriff des Patentanspruchs 1. Ein derartiger Wellenleiterlaser ist beispielsweise aus dem Prospekt von Melles Griot, "RF $CO_2$ Laser Guide", Seite 4, Kapitel 'Design and Construction', bekannt. Wie dort beschrieben, werden in derartigen Lasern üblicherweise die Spiegel bei der Herstellung des Lasers ausgerichtet und dann in ihrer Lage endgültig befestigt, beispielsweise auf die Enden der Laserröhre aufgelötet.

Die Aufgabe, die der vorliegenden Erfindung zugrundeliegt, besteht darin, daß ein Wellenleiterlaser, insbesondere $CO_2$-Wellenleiterlaser, bezüglich Modenbild und Leistung justierbar sein soll. Dazu ist es erforderlich, daß die beiden Spiegel nach dem Zusammenbau des Lasers zueinander und zur Symmetrieachse des Wellenleiters justierbar sind. Für justierbare Spiegelhalterungen gibt es zahlreiche Konstruktionsvorschläge. Beim Wellenleiterlaser muß jedoch zusätzlich darauf geachtet werden, daß der Spiegel möglichst nahe an das Ende des Wellenleiters herangebracht wird, da die Laserstrahlung aus dem Wellenleiter mit einem großen Öffnungswinkel austritt und somit bereits ein geringer Abstand zum Spiegel erhebliche Verluste an Laserleistung bedingt, da ein Teil der Laserleistung nicht in den Wellenleiter zurückreflektiert wird.

Darüber hinaus hat sich als Erkenntnis, die Grundlage der vorliegenden Erfindung ist, herausgestellt, daß durch den Keilfehler des Auskoppelspiegels eine optimale Justierung auf der optischen Bank vor der Inbetriebnahme des Lasers kaum möglich ist.

Die Aufgabe, bei einem Laser der eingangs beschriebenen Art eine optimale Einstellung nach Modenbild und Leistung zu erreichen, wird durch die kennzeichnenden Merkmale des Patentanspruchs 1 gelöst.

Während der für die Laserstrahlung undurchlässige Spiegel in an sich bekannter Weise vor dem Einbau des Lasers justiert werden kann, ist ein einwandfreies Justieren des teildurchlässigen Auskoppelspiegels nur anhand der Messung des Laserstrahles möglich. Andererseits kann im Bereich des Laserstrahles nicht hantiert werden, da bereits bei Strahlenenergien von etwa 20W sehr schnell erhebliche Schädigungen des menschlichen Körpers eintreten können. Insbesondere bei der nicht sichtbaren Infrarotstrahlung des $CO_2$-Lasers stellt jedes Hantieren am eingeschalteten Laser für den Operator eine erhebliche Gefahr gesundheitlicher Schädigung dar. Dies umso mehr, da selbst bei großer Vorsicht in der Handhabung Reflexionen an Teilen der Umgebung nicht erfaßt werden können und Schädigungen an unvermuteten Stellen auftreten können. Durch die Ausführung des Wellenleiterlasers gemäß dem Patentanspruch 1 können derartige Schädigungen ausgeschlossen werden, eine Justierung des teildurchlässigen Auskoppelspiegels während des Betriebes des Lasers ist möglich. In einer vorteilhaften Ausführungsform empfiehlt es sich, daß im Bereich zumindest eines offenen Endes des Wellenleiters ein Flansch angeordnet ist, in den die Spiegelhalterung hineinragt, daß der Flansch mit der Spiegelhalterung und dem in diese eingesetzten teildurchlässigen Auskoppelspiegel den Laser vakuumdicht abschließt, daß der Flansch und die Spiegelhalterung in Strahlrichtung des Laserstrahles für das Laserlicht durchlässig sind, daß die Spiegelhalterung einen von außerhalb des Lasers zugänglichen rohrförmigen Endbereich aufweist, daß von einem innerhalb des Flansches liegenden Teil der Halterung ausgehend ein Bindeglied aus duktilem Material zwischen dem Flansch und der Sspiegelhalterung angeordnet ist und daß dieses Bindeglied eine Verkippung des Spiegels gegenüber der Resonatorachse zuläßt, die durch ein Werkzeug bewirkt wird, welches am Endbereich der Spiegelhalterung angreift. Diese Ausführungsform gewährleistet mit geringem Aufwand eine dauerhafte Fixierung der eingestellten Lage des Spiegels. Dabei kann der Flansch und die Spiegelhalterung hohl oder auch mit einem für das Laserlicht durchlässigen Material gefüllt sein.

Eine vorteilhaft herstellbare Ausführungsform ist gegeben, indem der Flansch und die Spiegelhalterung rotationssymmetrisch sind und zentrale Öffnungen aufweisen, indem die Spiegelhalterung drei rohrförmige Zonen mit unterschiedlichem Außendurchmesser enthält, indem eine erste Zone mit dem größten Außendurchmesseer den Spiegel umfaßt, indem an diese erste Zone eine zweite Zone mit mittlerem Außendurchmesser angrenzt, indem auf diese zweite Zone ein rohrförmiges Bindeglied aus duktilem Material aufgeschoben ist, indem dieses Bindeglied die dritte Zone der Halterung mit dem kleinsten Durchmesser überragt, von der zweiten Zone in axialer Richtung beabstandet eine Durchmesserstufe des Flansches erreicht und in eine daran anschließende Bohrung des Flansches mit einem an den Außendurchmesser des Bindegliedes angepaßten Durchmesser hineinreicht und indem eine dritte Zone der Spiegelhalterung in den von außen zugänglichen Endbereich übergeht. Zum Schutz der einmal gewählten Einstellung ist es vorteilhaft, wenn der von außen zugängliche Endbereich der Spiegelhalterung von einem Rohrstutzen umgeben ist, welcher mit dem Flansch mechanisch fest verbunden ist und indem der Rohrstutzen in axialer Richtung über den Endbereich vorsteht. Zusätzlich ist es vorteilhaft, wenn die Halterung im Bereich des Rohrstutzens in der endgültigen Stellung mit dem Flansch zumindest an einer Stelle verklebt ist.

Um den Spiegel auswechselbar zu gestalten, wird eine Ausführungsform vorgeschlagen, in der der Flansch aus zwei Teilflanschen zusammengesetzt ist, in der ein erster Teilflansch über ein Rohrstück mit dem Entladungsraum mechanisch fest und heliumdicht verbunden ist, in der ein zweiter Teilflansch die Spiegelhalterung trägt und mit dem ersten Teilflansch mechanisch fest und heliumdicht verbunden ist und in der diese Verbindung zwischen den Teilflanschen lösbar und wiederherstellbar gestaltet ist. Hierzu dient beispielsweise eine Verschraubung der Flanschen, wobei zum Abdichten eine Kupferscheibe vorgesehen ist.

Eine vorteilhafte Justiereinrichtung zu Justierung eines erfindungsgemäßen Lasers ist durch die Merkmale gekennzeichnet, daß sie ein Justierwerkzeug mit einem Anschlußstück enthält, daß das Anschlußstück kraftschlüssig mit dem Endbereich der Spiegelhalterung des Lasers verbunden ist, daß die Verbindung zur Verkippung der Spiegelhalterung geeignet ist, daß das Justierwerkzeug einen Strahldurchtrittsraum enthält, daß dieser Strahldurchtrittsraum durch einen Griffbereich hindurch läuft und vor oder in einem Meßgerät für die Intensität der Laserstrahlung endet und daß die Durchtrittsöffnung des Spiegelhalters, der Durchtrittsraum des Justierwerkzeuges und das Intensitätsmeßgerät derart miteinander verbunden bzw. hintereinander angeordnet sind, daß kein für den Operator evtl. schädlicher Anteil der Laserstrahlung unmittelbar oder mittelbar, d.h. über Reflexionen, aus der Justiereinrichtung austreten kann. Hierzu können beispielsweise labyrintartige, für die Laserstrahlung absorbierende Übergänge zwischen den Teilen vorgesehen sein.

Vorteilhaft wird eine derartige Justiereinrichtung so ausgebildet, daß das Justierwerkzeug im wesentlichen ein Rohr ist, dessen Innendurchmesser so groß ist, daß auch bei einer durch den Einstellvorgang bedingten Schräglage gegenüber der Symmetrieachse des Lasers der Laserstrahl das Rohr nicht erreicht und daß das Rohr auf der beim Einsatz dem Laser zugewandten Seite in ein Anschlußstück übergeht und daß der Innendurchmesser des Anschlußstückes so an den Außendurchmesser des Endbereiches der Laserhalterung angepaßt ist, daß das Justierwerkzeug aufgesteckt und die Verkippung des Spiegels durchgeführt werden kann. Diese Ausführungsform ermöglicht auch bei energiereichen Laserstrahlen eine gefahrlose Justierung. Das Justierwerkzeug wird nicht durch den Laserstrahl erhitzt oder gar stellenweise geschmolzen und damit für die Strahlung durchgängig gemacht. Hierzu würde bereits ein Laserstrahl von z.B. etwa 30W ausreichen. Eine derartige Justiereinrichtung ist vorteilhaft so ausgeführt, daß das Anschlußstück einen gegenüber dem Innendurchmesser des Rohrstückes des Flansches umso viel geringeren Außendurchmesser aufweist, daß es beim zu erwartenden maximalen Kippwinkel nicht am Rohrstück anliegt und daß das Anschlußstück im Bereich seines äußeren Umfanges angefast ist. Diese Ausführungsform ist besonders bei kleinen Durchmessern vorteilhaft, da die Fase ein leichtes Einführen in das Rohrstück und eine Vorzentrierung ermöglicht und damit das Aufsetzen des Werkzeuges erleichtert, während überflüssige Toleranzen vermieden werden.

Die Erfindung wird nun anhand von drei Figuren näher erläutert. Sie ist nicht auf die in den Figuren gezeigten Beispiele beschränkt.

FIG 1 zeigt einen erfindungsgemäßen Laser in geschnittener und gebrochener Ansicht.

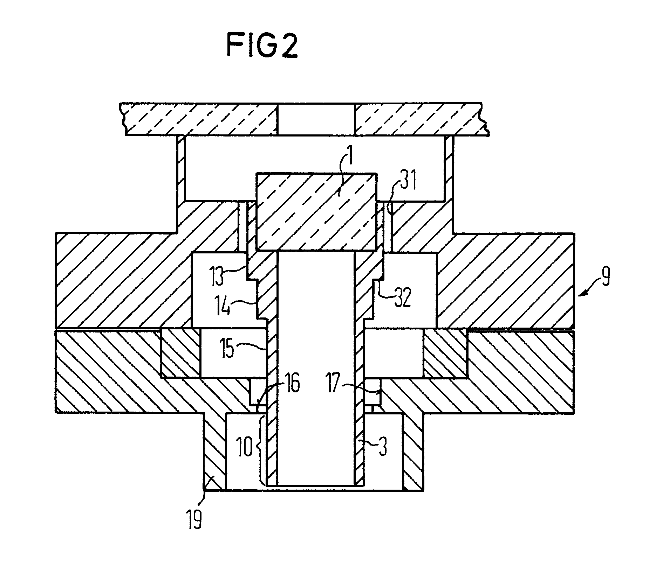

FIG 2 zeigt einen Flansch mit Spiegelhalterung, wobei das Bindeglied weggelassen wurde.

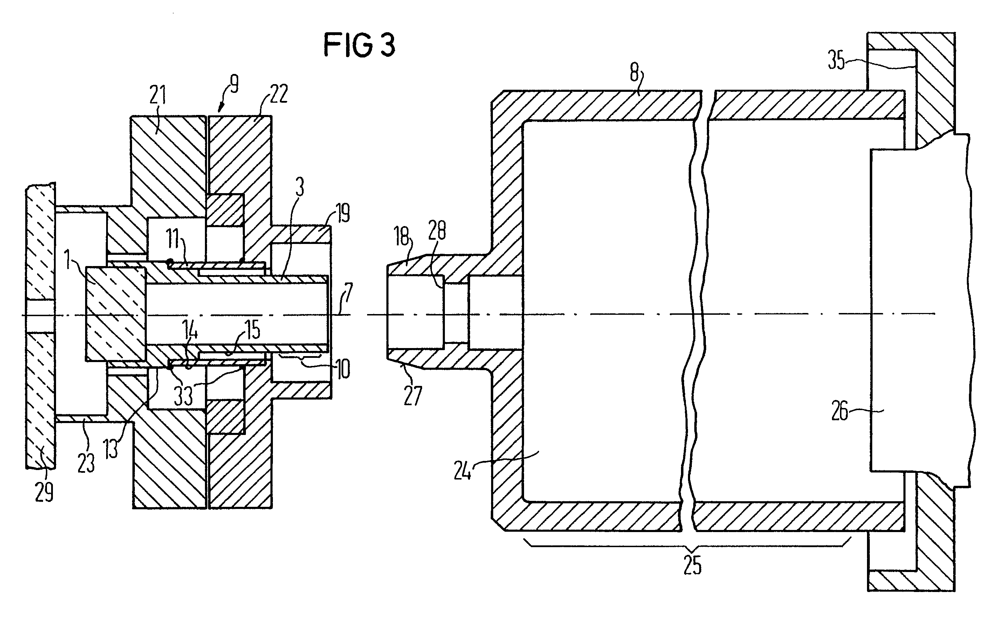

FIG 3 zeigt eine erfindungsgemaße Justiereinrichtung, bestehend aus Laser, Justierwerkzeug und Intensitätsmeßgerät, in teilweise geschnittener und gebrochener Ansicht schematisch.

Ein teildurchlässiger Auskoppelspiegel 1 ist auf der dem Wellenleiter 5 zugewandten Seite einer Spiegelhalterung 3 eines Wellenleiterlasers befestigt. Die Spiegelhalterung 3 ist über ein Bindeglied 11 mit einem Flansch 9 mechanisch fest und heliumdicht verbunden, vorzugsweise verlötet. Der Flansch 9 ist über ein Rohrstück 23 mit einer Stirnwand 29 des Laserrohres 30 heliumdicht verbunden. Das Rohrstück 23 ist dabei dünnwandig und besteht aus duktilem Material, so daß mechanische Spannungen infolge von Temperaturänderungen eine Verformung des Rohrstückes, nicht aber ein Brechen der Lötstelle hervorrufen. Der Flansch 9 besteht aus Teilflanschen 21 und 22, wobei die Spiegelhalterung 3 am außen liegenden Teilflansch 22 befestigt ist. Der Spiegel 1 reicht bis in die unmittelbare Nähe der Stirnwand 29 und damit des Wellenleiters 5. Er ist durch eine seitliche Bewegung des Endbereiches 10 der Spiegelhalterung 3 verkippbar. Hierzu bietet die Ausnehmung 31, in die die Spiegelhalterung 3 hineinreicht, und der Innendurchmesser des Bindegliedes 11 und die Bohrung im Teilflansch 22 ausreichend Spielraum. Das Bindeglied 11 ist aus duktilem Material, so daß eine definierte und bleibende Verkippung des Spiegels 1 gegenüber der Symmetrieachse 7 des Wellenleiters durch eine seitliche Auslenkung des Endbereichs 10 der Spiegelhalterung 3 erreicht werden kann.

Eine hochpräzise Justierung des Spiegels 1 in der Serienfertigung wird erreicht, indem das Bindeglied 11 ein Rohrstück ist und indem die Spiegelhalterung drei Zonen 13 bis 15 mit unterschiedlichem Außendurchmesser besitzt. Eine erste Zone 13 mit dem größten Außendurchmesser umfaßt den Spiegel 1 und reicht in die Ausnehmung 31 hinein. In axialer Richtung angrenzend liegt eine zweite Zone 14 mit dem mittleren Außendurchmesser. Diese ist durch eine Durchmesserstufe 32 von der ersten Zone 13 abgesetzt. An die zweite Zone 14 schließt sich eine dritte Zone 15 mit dem kleinsten Außendurchmesser an. Das Bindeglied 11 ist rohrförmig gestaltet und auf die Zone 14 aufgeschoben und liegt an der Durchmesserstufe 32 an. Es überragt die dritte Zone 15 und reicht in eine von der zweiten Zone 14 in axialer Richtung beabstandete Bohrung im Flansch 9 hinein und liegt an einer Durchmesserstufe 16 des Flansches 9 an. Durch die beiden Durchmesserstufen 32, 16 ist die Lage des Bindegliedes 11, der Spiegelhalterung 3 und damit auch des Spiegels 1 in axialer Richtung exakt definiert. Dadurch kann der Spiegel 1 sehr nahe an die Öffnung des Wellenleiters 5 heranreichen, ohne daß bei der Serienfertigung eine Berührung des Spiegels 1 mit der Stirnfläche 29 und damit eine Beeinträchtigung der Justierbarkeit zu befürchten ist. Lotnähte 33 sichern die Position des Bindegliedes 11.

Eine vakuumdichte, lösbare und wiederherstellbare Verbindung zwischen den Flanschteilen 21 und 22 ist beispielsweise durch eine Verschraubung erreicht, die durch einen Dichtring 34 aus duktilem Metall, beispielsweise aus Kupfer vakuum- und heliumdicht ausgeführt ist.

Die dritte Zone 15 der Spiegelhalterung geht in den Endbereich 10 über. Der Endbereich 10 ist von außen für ein Justierwerkzeug 8 mit einem Anschlußstück 18 zugänglich. Der Innendurchmesser des Anschlußstückes 18 ist auf den Außendurchmesser des Endbereiches 10 angepaßt, so daß sich das Anschlußstück 18 problemlos auf den Endbereich 10 schieben läßt, wobei das Spiel in radialer Richtung so gering ist, daß eine Verkippung des Spiegels einwandfrei und präzise möglich ist. Eine Fase 27 im Endbereich des Anschlußstückes 18 erleichtert das Einführen des Anschlußstückes 18 in den Rohrstutzen 19 des Flansches 9. Der Rohrstutzen 19 schützt nach dem Justieren des Spiegels den Endbereich 10 vor einer Berührung und Dejustierung von außen. Eine oder mehr Klebestellen 20 sichern zusätzlich die eingestellte Position des Endbereiches 10 gegenüber dem Flansch 9. Das Justierwerkzeug 8 besitzt einen Strahldurchtrittsraum 24 im Griffbereich 25, dessen Durchmesser gewährleistet, daß auch beim Verkippen der Laserstrahl die Wandung des Justierwerkzeuges 8 nicht erreichen kann. Ein Intensitätsmeßgerät 26, hier nur schematisch angedeutet, mißt die Strahlintensität und läßt die Beobachtung der Form des Strahles zu. Dadurch kann der Strahl nach Modenreinheit und maximaler Intensität justiert werden. Das Justierwerkzeug 8 ragt in eine Ringnut 35 des Intensitätsmeßgerätes 26, wobei die Oberfläche der Ringnut 35 aus einem für die Laserstrahlung absorbierenden Material besteht. Dadurch wird der Austritt von Laserstrahlung unterbunden.

Das Anschlußstück 18 des Justierwerkzeuges 8 besitzt vorteilhaft eine Durchmesserstufe 28, die als Anschlag für den Endbereich 10 dient.

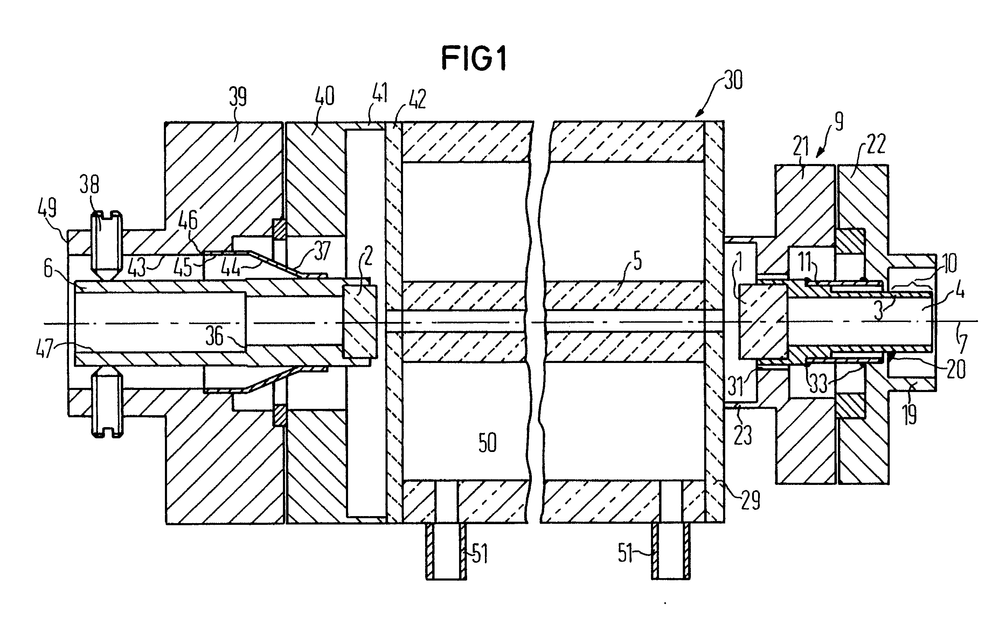

Zur Justierung des lichtundurchlässigen Spiegels 2 oder bei einer Spiegelhalterung mit relativ großem Durchmesser kann auch eine nur über eine Bohrung zugängliche Spiegelhalterung eingesetzt werden, wie z.B. in FIG 1 dargestellt.

Ein Spiegel 2 ist in einer Spiegelhalterung 6 gehalten, welche rohrförmig ausgebildet ist und eine Durchmesserstufe 36 enthält. Die Spiegelhalterung 6 ist mit einem Bindeglied 37 in der Nähe des Spiegels 2 mechanisch fest verbunden, wobei das Bindeglied 37 anschließend an diese Verbindung in einen Konus 44 und daran anschließend in einen Zylinder 45 mit größerem Durchmesser übergeht. Der Zylinder 45 ist mit einer Bohrung 43 im Teilflansch 39 mechanisch fest und heliumdicht verbunden und liegt an einer Durchmesserstufe 46 der Bohrung 43 an. Stellschrauben 38, die in radialer Richtung gegen die Spiegelhalterung 6 drükken, halten letztere in ihrem außen liegenden Endbereich in der eingestellten Lage.

Der Teilflansch 39 ist mit einem zweiten Teilflansch 40 und dieser über einen Rohrstutzen 41 mit einer Endplatte 42 des Laserrohres 30 heliumdicht verbunden. Die Verbindung zwischen den beiden Teilflanschen 39 und 40 ist lösbar und wiederherstellbar, so daß eine Herausnahme des Spiegels 2 zum Zwecke des Ersatzes oder der Reinigung möglich ist.

Die Justierung dieser Spiegelhalterung kann bei einem für die Laserstrahlung undurchlässigen Spiegel mit Hilfe eines in den äußeren Bereich 47 der Bohrung 43 eingeführten Stab erfolgen, wobei die Stellschrauben 38 die Fixierung und eine Feinjustierung übernehmen. Bei ausreichend großem Durchmesser kann in den äußeren Bereich 47 ein rohrförmiges Anschlußstück eines Werkzeuges eingeführt werden, wobei für das Werkzeug bei Verwendung für einen teildurchlässigen Spiegel denselben Anforderungen genügen muß, wie für die vorher beschriebene Ausführungsform.

Die Stirnwand 49 des Flanschteiles 39 steht über die Spiegelhalterung 6 vor, so daß die Spiegelhalterung 6 vor unerwünschten Berührungen oder Dejustierungen geschützt ist.

Das Laserrohr enthält einen Kühlkanal 50 und Kühlwasseranschlüsse 51. Dadurch werden Temperaturschwankungen und damit Verbiegungen des Wellenleiters ausreichend klein gehalten. Dies ermöglicht die Herstellung relativ langer und damit leistungsstarker Wellenleiterlaser, bei denen die beanspruchte Justiermöglichkeit der Spiegel besonders vorteilhaft ausgenutzt werden kann.

## Patentansprüche

1. Wellenleiterlaser mit einem Lasergas als laseraktivem Medium, welcher Resonatorspiegel enthält, wobei zumindest ein Resonatorspiegel in einer Spiegelhalterung gehalten ist, die ein Justieren durch Änderung der Neigung des Spiegels gegenüber der Resonatorachse zuläßt, indem die Spiegelhalterung eine Durchtrittsöffnung für die Laserstrahlung besitzt, **dadurch gekennzeichnet**, daß der Resonatorspiegel an dem Ende der Spiegelhalterung befestigt ist, welches dem Wellenleiter zugewandt ist, daß das zweite Ende der Spiegelhalterung von außen zugänglich ist, daß die Spiegelhalterung mittels eines Justierwerkzeuges gegenüber der Resonatorachse verstellbar ist und daß eine Durchtrittsöffnung des Justierwerkzeuges während des Justiervorganges mit der Durchtrittsöffnung in der Spiegelhalterung fluchtend und die Laserstrahlung abschirmend angeordnet werden kann.

2. Wellenleiterlaser nach Anspruch 1, **dadurch gekennzeichnet**, daß im Bereich zumindest eines offenen Endes des Wellenleiters ein Flansch angeordnet ist, in den die Spiegelhalterung hineinragt und daß der Flansch mit der Spiegelhalterung und dem in diese eingesetzten teildurchlässigen Resonatorspiegel den Laser heliumdicht abschließt, daß der Flansch und die Spiegelhalterung in Strahlrichtung des Laserstrahles für das Laserlicht durchlässig sind, daß die Spiegelhalterung einen von außerhalb des Lasers zugänglichen rohrförmigen Endbereich aufweist, daß von einem innerhalb des Flansches liegenden Teil der Halterung ausgehend ein Bindeglied aus duktilem Material zwischen dem Flansch und der Spiegelhalterung angeordnet ist und daß dieses Bindeglied eine Verkippung des Spiegels gegenüber der Resonatorachse zuläßt, die durch ein Werkzeug bewirkt wird, welches am Endbereich der Spiegelhalterung angreift.

3. Wellenleiterlaser nach Anspruch 2, **dadurch gekennzeichnet**, daß der Flansch und die Spiegelhalterung rotationssymmetrisch sind und zentrale Öffnungen aufweisen, daß die Spiegelhalterung drei rohrförmige Zonen mit unterschiedlichem Außendurchmesser enthält, daß eine erste Zone mit dem größten Außendurchmesser den Spiegel umfaßt, daß an diese erste Zone eine zweite Zone mit mittlerem Außendurchmesser angrenzt, daß auf diese zweite Zone ein rohrförmiges Bindeglied aus duktilem Material aufgeschoben ist, daß dieses Bindeglied die dritte Zone der Halterung mit dem kleinsten Durchmesser überragt, von der zweiten Zone in axialer Richtung beabstandet eine Durchmesserstufe des Flansches erreicht und in eine daran anschließende Bohrung des Flansches mit einem an den Außendurchmesser des Bindegliedes angepaßten Durchmesser hineinreicht und daß eine dritte Zone der Spiegelhalterung in den von außen zugänglichen Endbereich übergeht.

4. Wellenleiterlaser nach Anspruch 3, **dadurch gekennzeichnet**, daß der von außen zugängliche Endbereich der Spiegelhalterung von einem Rohrstutzen umgeben ist, welcher mit dem Flansch mechanisch fest verbunden ist und daß der Rohrstutzen in axialer Richtung über den Endbereich vorsteht.

5. Wellenleiterlaser nach Anspruch 4, **dadurch gekennzeichnet**, daß die Halterung im Bereich des Rohrstutzens in der endgültigen Stellung mit dem Flansch zumindest an einer Stelle verklebt ist.

6. Wellenleiterlaser nach einem der Ansprüche 1 bis 5, **dadurch gekennzeichnet**, daß der Flansch aus zwei Teilflanschen zusammengesetzt ist, daß ein erster Teilflansch über ein Rohrstück mit dem Entladungsraum mechanisch fest und vakuumdicht verbunden ist, daß ein zweiter Teilflansch die Spiegelhalterung trägt und mit dem ersten Teilflansch mechanisch fest und vakuumdicht verbunden ist und daß diese Verbindung zwischen den Teilflanschen lösbar und wiederherstellbar gestaltet ist.

7. Justiereinrichtung zur Justierung eines Lasers nach einem der Ansprüche 1 bis 6, **dadurch gekennzeichnet,** daß sie ein Justierwerkzeug mit einem Anschlußstück enthält, daß das Anschlußstück kraftschlüssig mit dem Endbereich der Spiegelhalterung des Lasers verbunden ist, daß die Verbindung zur Verkippung der Spiegelhalterung geeignet ist, daß das Justierwerkzeug einen Strahldurchtrittsraum enthält, daß dieser Strahldurchtrittsraum durch einen Griffbereich hindurchläuft und vor oder in einem Meßgerät für die Intensität der Laserstrahlung endet und daß die Durchtrittsöffnung des Spiegelhalters, der Durchtrittsraum des Justierwerkzeuges und das Intensitätsmeßgerät derart miteinander verbunden bzw. hintereinander angeordnet sind, daß kein für den Operator evtl. schädlicher Anteil der Laserstrahlung unmittelbar oder mittelbar, d.h. über Reflexionen aus der Justiereinrichtung austreten kann.

8. Justiereinrichtung nach Anspruch 7, **dadurch gekennzeichnet**, daß das Justierwerkzeug im wesentlichen ein Rohr ist, dessen Innendurchmesser so groß ist, daß auch bei einer durch den Einstellvorgang bedingten Schräglage gegenüber der Rotationsachse des Lasers der Laserstrahl das Rohr nicht erreicht und daß das Rohr auf der beim Einsatz dem Laser zugewandten Seite in ein Anschlußstück übergeht und daß der Innendurchmesser des Anschlußstückes so an den Außendurchmesser des Endbereiches der Laserhalterung angepaßt ist, daß das Justierwerkzeug aufgesteckt und die Verkippung des Spiegels durchgeführt werden kann.

9. Justiereinrichtung nach Anspruch 8, **dadurch gekennzeichnet**, daß das Anschlußstück einen gegenüber dem Innendurchmesser des Rohrstückes des Flansches um soviel geringeren Außendurchmesser aufweist, daß es beim zu erwartenden maximalen Kippwinkel nicht am Rohrstück anliegt und daß das Anschlußstück im Bereich seines äußeren Umfanges angefast ist.

FIG1

# FIG2

# FIG 3

EP 0 456 875 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | JOURNAL OF PHYSICS D: APPLIED PHYSICS, Band 10, Nr. 1, Januar 1977, Seiten 1-6; D.R. HALL et al.: "A compact sealed waveguide $CO_2$ laser" * Figur 1 * <br> – – – | 1 | H 01 S 3/086 |
| A | EP-A-0 166 028 (SIEMENS) * Zusammenfassung; Seite 3, letzter Absatz; Abbildung 1 * <br> – – – | 1 | |
| A | EP-A-0 251 096 (SIEMENS) * Ansprüche 1-3; Abbildung 1 * <br> – – – – – | 1 | |

| RECHERCHIERTE SACHGEBIETE (Int. Cl.5) |
|---|
| H 01 S |

Der vorliegende Recherchenbericht wurde für alle Patentansprüche erstellt

| Recherchenort | Abschlußdatum der Recherche | Prüfer |
|---|---|---|
| Den Haag | 09 Januar 91 | MALIC K. |